Europäisches Patentamt

European Patent Office

Office européen des brevets

(11) Veröffentlichungsnummer: **0 219 917 B1**

## EUROPÄISCHE PATENTSCHRIFT

(45) Veröffentlichungstag der Patentschrift: **29.12.93**

(21) Anmeldenummer: **86201819.9**

(22) Anmeldetag: **20.10.86**

(51) Int. Cl.⁵: $H04Q\ 11/04$

(54) **Vermittlungsanlage mit Fehlerkorrektur.**

(30) Priorität: **22.10.85 DE 3537451**

(43) Veröffentlichungstag der Anmeldung:
**29.04.87 Patentblatt 87/18**

(45) Bekanntmachung des Hinweises auf die
Patenterteilung:
**29.12.93 Patentblatt 93/52**

(84) Benannte Vertragsstaaten:
**DE FR GB NL SE**

(56) Entgegenhaltungen:
**EP-A- 0 093 523**
**EP-A- 0 170 799**
**DE-A- 2 359 847**
**US-A- 3 886 318**

**COMPUTER, Band 14, Nr. 12, Dezember 1981,
Seiten 65-76, IEEE, Long Beach, CA, US; H.J.
SIEGEL et al.: "The Multistage cube: A versatile interconnection network"**

**PHILIPS TECHNICAL REVIEW, Band 41, Nr. 1,
1983/84, Seiten 1-11, Eindhoven, NL; Th.
KROL: "The "(4,2) concept" fault-tolerant
computer"**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB NL SE**

(72) Erfinder: **Krüger, Johann
Alter Hof 3
D-2085 Ouickborn(DE)**
Erfinder: **Jasmer, Wolfgang
Dachsberg 13B
D-2000 Hamburg 61(DE)**

(74) Vertreter: **Poddig, Dieter, Dipl.-Ing. et al
Philips Patentverwaltung GmbH
Wendenstrasse 35c
D-20097 Hamburg (DE)**

PROCEEDINGS OF THE INTERNATIONAL SWITICHING SYMPOSIUM, Montréal, 21.-25. September 1981, "Session" 34A, "Paper" 3, Seiten 1-9; SCHRAMEL et al.: "The peripheral control domain, an all-digital intelligent terminal for subscribers and trunks in the PRX/D system"

## Beschreibung

Die Erfindung betrifft eine Vermittlungsanlage zur rechnergesteuerten Vermittlung einer Vielzahl von Leitungen, von denen jede digitale zeitverschachtelte Daten führt, über ein Koppelfeld, das die Daten in Form von mehrere Datenbits umfassenden Datenwörtern parallel überträgt.

Derartige Vermittlungsanlagen, bei denen insbesondere die Koppelfelder verschiedenen Aufbau haben, sind allgemein bekannt und dienen für die Vermittlung einer großen Anzahl von Teilnehmerstellen. Da ein fehlerbedingter Ausfall einer derartigen Vermittlungsanlage eine große Anzahl von Teilnehmern betrifft, werden hohe Anforderungen an die Zuverlässigkeit derartiger Vermittlungsanlagen gestellt, insbesondere an die Rechner für die Erzeugung der Steuerdaten zur Einstellung der Koppelfelder, denn ein Fehler in diesem Steuerrechner kann die gesamte Vermittlungsanlage ausfallen lassen. Es ist daher üblich, zumindest die Steuerrechner für Vermittlungsanlagen doppelt oder dreifach vorzusehen, wie beispielsweise aus der Zeitschrift "Philips Technical Review" Vol. 41, Nr. 1983/84, Nr. 1, Seiten 1 bis 11 hervorgeht. Darin ist auch erläutert, wie es durch ein spezielles Fehlersicherungskonzept erreicht werden kann, daß einer von mehreren Rechnern ausfallen kann, ohne daß die gesamte Vermittlungsanlage zusammenbricht.

In allen Konzepten wird jedoch keine Fehlersicherung der eigentlichen Koppelfelder verwendet, da davon ausgegangen wird, daß beispielsweise ein defektes Bauelement nur einen vermittelten Weg, d.h. die zwei beteiligten Teilnehmer betrifft, wobei bestimmte Konzepte von Koppelfeldern erlauben würden, eine bestehende Verbindung umzuschalten, so daß die defekte Stelle umgangen wird, wenn der Fehler festgestellt ist. Zum Feststellen eines Fehlers in einer neu aufgebauten Verbindung ist es üblich, vor den zu übertragenden Daten bestimmte Prüfdaten über die Verbindung zu senden und am Ende der Verbindung zu prüfen, ob diese richtig eintreffen. Ein derartiges Verfahren ist jedoch nicht nur zeitraubend, sondern in vielen Arten von Koppelfeldern bzw. bei manchen Fehlerstellen ist es nicht möglich, einen Weg zu vermitteln, der die fehlerhafte Stelle umgeht, und außerdem können Fehler, die während des Bestehens eines vermittelten Weges auftreten, nicht ohne weiteres festgestellt werden. Insbesondere bei der Übertragung von Daten kann dies erhebliche Auswirkungen haben.

Es ist zwar bekannt, zu übertragende Daten durch Hinzufügen von redundanten Bits, die auf verschiedene Weise gewonnen sein können, oder durch vollständige Umcodierung zu sichern, wobei je nach der Menge der zugefügten redundanten Bits eine mehr oder weniger umfangreiche Wiederherstellung von verfälschten Datenwörtern und in jedem Falle eine umfangreichere Erkennung falscher Datenwörter, die nicht wiederhergestellt werden können, möglich ist. Im Falle eines aufgetretenen und erkannten Fehlers ist jedoch die Reparatur äußerst schwierig, da eine Vermittlungsanlage niemals abgeschaltet werden kann.

Aufgabe der Erfindung ist es, eine Vermittlungsanlage der eingangs genannten Art anzugeben, bei der die zu vermittelnden Daten derart fehlergesichert über das Koppelfeld übertragen werden, daß bei Defekten insbesondere im Koppelfeld bis zu einem gewissen Umfang verfälschte Datenwörter wiederhergestellt und weiter verfälschte Datenwörter erkannt werden können und eine Reparatur von defekten Teilen auf einfache Weise ohne Abschalten der Vermittlungsanlage möglich ist.

Diese Aufgabe wird erfindungsgemäß dadurch gelöst, daß dem Koppelfeld ein Codierer vorgeschaltet ist, der aus jedem Datenwort ein Codewort mit einer Anzahl Codebits, die größer als die Anzahl Datenbits je Datenwort ist, erzeugt und dem Koppelfeld zuführt, das in eine Anzahl paralleler Teilkoppelfelder zur Übertragung jeweils eines Teilcodewortes, bestehend aus einem Teil der Codebits, aufgeteilt ist, und daß dem Koppelfeld ein Decoder nachgeschaltet ist, der aus allen Teilcodewörtern die ursprünglichen Datenwörter erzeugt, wobei die Codewörter und die Teilcodewörter in an sich bekannter Weise derart aufgebaut sind, daß bei mindestens einem verfälschten Teilcodewort der Decoder die richtigen Datenwörter und ein das verfälschte Teilcodewort anzeigendes Fehlersignal erzeugt.

Die Erfindung benutzt die Codierregeln, die in der bereits genannten Druckschrift angegeben sind, in einer besonderen Weise für die Fehlersicherung der zu vermittelten Daten selbst. Dadurch treten in den vermittelnden Daten Fehler innerhalb nur eines Teilkoppelfeldes nicht in Erscheinung, sie werden jedoch erkannt. Eine Erkennung erfolgt auch dann, wenn mehr als ein Teilkoppelfeld für denselben vermittelnden Weg fehlerhaft ist, wobei dann die Datenwörter allerdings nicht mehr wiederhergestellt werden können. Ein gleichzeitiges Auftreten mehrerer Fehler ist jedoch sehr unwahrscheinlich. Die Fehlerüberwachung kann während des Betriebes, d.h. nach dem Aufbau eines vermittelnden Weges, ständig erfolgen, so daß das Wegeprüfen vor dem Durchschalten einer Verbindung entfällt.

Wenn ein Defekt in einem Teilkoppelfeld aufgetreten ist, kann dieses leicht während des Betriebes ausgetauscht werden, da mit den übrigen Teilkoppelfeldern die Wiederherstellung der übertragenen Datenwörter richtig möglich ist. Dadurch braucht die Vermittlungsanlage für Reparaturzwecke nicht ausgeschaltet zu werden.

3

Eine günstige Codierung besteht darin, daß die Anzahl der Codebits je Codewort doppelt so groß ist wie die Anzahl der Datenbits je Datenwort. Dies stellt einen guten Kompromiß zwischen dem im Koppelfeld zusätzlich erforderlichen Aufwand und den Möglichkeiten zur Fehlerkorrektur dar.

Die Steuerung der Koppelfelder erfolgt durch einen zentralen Vermittlungsrechner, der insbesondere aufgrund der Signalisierungsdaten den durchzuschaltenden Weg bestimmt. Häufig werden die vom Vermittlungsrechner erzeugten Signale, die den durchzuschaltenden Weg angeben, einem dem Koppelfeld direkt zugeordneten Einstellrechner zugeführt, der aufgrund dieser Signale die Durchschaltung des Weges, beispielsweise die Ansteuerung der einzelnen Koppelpunkte, durchführt. Eine Ausgestaltung der Erfindung für eine derartige Vermittlungsanlage ist dadurch gekennzeichnet, daß jedem Teilkoppelfeld ein eigener, vorzugsweise fehlergesicherter Einstellrechner zugeordnet ist und alle Einstellrechner parallel von einem vorzugsweise fehlergesicherten zentralen Vermittlungsrechner gesteuert sind. Auf diese Weise wird verhindert, daß ein Fehler in einem Einstellrechner zu einem Zusammenbruch der Vermittlungsanlage führt, da ein defekter Einstellrechner, der in einem Teilkoppelfeld einen falschen Weg schaltet, für den dem Koppelfeld nachgeschalteten Decoder wie ein Fehler in einem Teilkoppelfeld wirkt, der erkennbar und korrigierbar ist. Die Wahrscheinlichkeit für Fehlvermittlungen ist vernachlässigbar klein, weil mindestens eine bestimmte Anzahl Einstellrechner identische Fehler machen müßten. Wenn der Einstellrechner in einer Baugruppe mit dem zugehörigen Teilkoppelfeld zusammengefaßt ist, kann während des Betriebs die gesamte Baugruppe ausgetauscht werden. Diese verursacht zwar zunächst Fehlverbindungen, da der Einstellrechner noch nicht mit den gesamten Daten für die Vermittlung aller Wege geladen ist, jedoch wirkt dies wie ein Fehler im Teilkoppelfeld, der im Decoder korrigierbar ist. Da Verbindungen aber nur begrenzte Zeit bestehen und laufend neue Verbindungen aufgebaut werden, deren Einstelldaten der Einstellrechner dann ebenfalls erhält, werden die von einer ausgewechselten Baugruppe zunächst erzeugten falschen Datenwörter zunehmend weniger, bis schließlich nur noch solche Wege aktiv sind, die nach dem Austausch vermittelt wurden. Ein Datenaustausch der Einstellrechner untereinander ist somit nicht erforderlich, und es ergeben sich auch keine Synchronisationsprobleme.

Der zusätzliche Aufwand für die fehlergesicherte Übertragung der Daten innerhalb der Vermittlungsanlage gemäß der Erfindung besteht außer dem zusätzlichen Umfang des Koppelfeldes auch in dem Codierer und dem Decoder. Besonders der letztere muß einen relativ großen Umfang haben, da die Anzahl der Codebits größer ist als die Anzahl der Datenbits. Um diesen Umfang zu verringern, ist es nach einer weiteren Ausgestaltung der Erfindung zweckmäßig, daß der dem Koppelfeld vorgeschaltete Codierer aus mindestens zwei Teilcodierern besteht, von denen jeder einen anderen Teil des Datenwortes empfängt und ein Untercodewort erzeugt, daß jedes Teilkoppelfeld ein Teilcodewort aus jeweils einem anderen Teil der Codebits mindestens einiger Untercodewörter überträgt, so daß alle Teilkoppelfelder alle Untercodewörter übertragen, und daß der dem Koppelfeld nachgeschaltete Decoder aus einer der Anzahl Teilcodierern gleichen Anzahl Teildecodern besteht, die derart mit den Ausgängen des Koppelfeldes verbunden sind, daß jeder Teildecoder jeweils alle Codebits eines Untercodewortes erhält und den entsprechenden Teil des Datenwortes erzeugt. Dabei können die Teilcodierer die Teildecoder je untereinander gleich aufgebaut sein. Es ist jedoch auch möglich, keine physikalisch getrennten Teilcodierer zu verwenden, sondern den Codierer so aufzubauen, daß die entsprechenden Teilcodewörter entnommen werden können. Die Aufteilung des Decoders in mehrere Teildecoder führt jedoch zu einem erheblich verringerten Gesamtaufwand, wie später erläutert wird, wobei die Möglichkeit, fehlerhafte Teilcodewörter zu korrigieren bzw. zu erkennen, bei normaler Fehlerwahrscheinlichkeit nur geringfügig verschlechtert wird. Dadurch, daß jedes Teilkoppelfeld einen anderen Teil der Codebits mindestens einiger Unter-codewörter überträgt, wirkt sich ein einzelnes defektes Teilkoppelfeld nur so aus, daß jeder Teildecoder zwar ein verfälschtes, jedoch korrigierbares Untercodewort erhält und damit das gesamte Datenwort dennoch richtig wiederherstellen kann.

Bei der Decodierung der Codewörter kann die weitaus größte Anzahl fehlerhafter Codewörter wenn nicht korrigiert, so doch als fehlerhaft erkannt werden, wobei der Decoder ein entsprechendes Fehlersignal abgibt, das auch mehrere Bits umfassen kann, um verschiedene Fehler voneinander zu unterscheiden. Bei der eingangs genannten Druckschrift werden die Fehlersignale des Decoders von dem jeweils zugeordneten Rechner ausgewertet. Bei entsprechender Anwendung dieses Prinzips bei der vorliegenden Erfindung ist eine weitere Ausgestaltung dadurch gekennzeichnet, daß ein dem Decoder zugeordneter Fehlerspeicher mit den Fehlersignalausgängen des Decoders und mit einer den Vermittlungsweg durch das Koppelfeld anzeigenden Einrichtung, insbesondere einem die Datenwörter innerhalb eines Rahmens zählenden Zählers, verbunden ist, daß beim Auftreten eines Fehlersignals dieses und die Anzeige des Vermittlungsweges im Fehlerspeicher gespeichert und ein entsprechendes Signal an einen Überwachungsrechner übersandt wird, und daß der Überwachungsrechner über einen Datenbus den Inhalt des Fehlerspeichers abruft und diesen löscht. Auf diese Weise kann der Überwachungsrechner im wesentlichen unabhängig von den Fehlermeldungen arbeiten, wobei auch der Fall zugelassen werden kann, daß nach dem Auftreten eines Fehlersignals und dessen Abfrage durch den Überwachungsrechner noch weitere Fehlersignale auftreten, die dann nicht gespeichert werden. Wenn jedoch ein dauerhafter Defekt in einem Teilkoppelfeld vorliegt, werden die dadurch erzeugten Fehlersignale periodisch auftreten, so daß bei mehreren Defekten jeder Fehler irgenwann einmal erfaßt wird. Es ist jedoch auch möglich, daß der Fehlerspeicher die Signale mehrerer nacheinander auftretender Codewortfehler speichert und der Überwachungsrechner nur die jeweils abgerufenen Signale der gespeicherten Fehler löscht. Dabei kann der Fehlerspeicher als sogenannter FIFO aufgebaut sein, so daß der Überwachungsrechner bei einem Zugriff zum Abrufen der gespeicherten Fehlersignale mehrere davon abruft, jedoch nicht notwendigerweise alle, die momentan gespeichert sind.

Ausführungsbeispiele der Erfindung werden nachstehend anhand der Zeichnung näher erläutert.

Es zeigen:

Fig. 1 ein Blockschaltbild eines Teils einer Vermittlungsanlage mit Steuerrechnern und Aufteilung des Koppelfeldes in Teilkoppelfelder mit vorgeschaltetem Codierer und nachgeschaltetem Decoder,

Fig. 2 ein vereinfachtes schematischer Schaltbild von Codierer, Teilkoppelfeldern und Decoder zur Erläuterung der Aufteilung der Datenwörter,

Fig. 3 ein Blockschaltbild der Behandlung der Fehlersignale, die vom Decoder bei fehlerhaft übertragenen Datenwörtern auftreten.

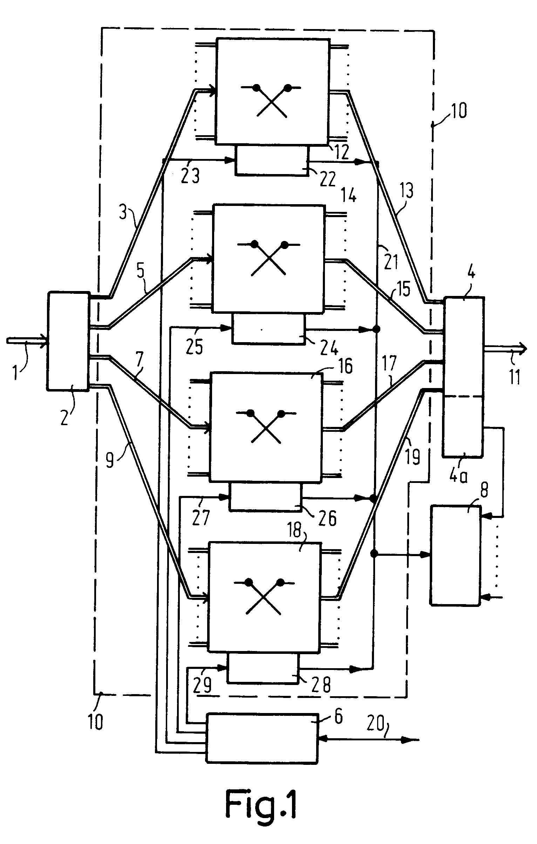

In Fig. 1 ist ein Koppelfeld 10 einer Vermittlungsanlage dargestellt, das von einem Vermittlungsrechner 6 gesteuert wird. Diesem Koppelfeld 10 werden über eine Anzahl Eingänge, von denen hier nur der Eingang 1 beispielhaft dargestellt ist, digitale Datenwörter vorzugsweise bitparallel zugeführt, wobei jedem Eingang wie dem Eingang 1 eine Anzahl Kanäle von jeweils einem Teilnehmer zeitverschachtelt in Form aufeinanderfolgender Rahmen zugeführt werden.

Die durchgeschalteten bzw. vermittelten Daten werden auf einer der Anzahl der Eingänge gleichen Anzahl Ausgänge abgegeben, von denen hier nur ein Ausgang 11 beispielhaft angegeben ist. Jeder Ausgang führt zeitverschachtelt die Datenwörter einer gleichen Anzahl Kanäle wie jeder Eingang, jedoch infolge der Vermittlung im Koppelfeld 10 andere Kanäle bzw. in anderer Reihenfolge. In einer vollständigen Vermittlungsanlage sind noch weitere Elemente vorhanden, beispielsweise Leitungsschaltungen für eingehende und ausgehende Leitungen sowie gegebenenfalls Multiplexer und Demultiplexer, die hier jedoch nicht dargestellt sind, da sie für die Erläuterung der Erfindung nicht von Bedeutung sind.

Jeder Eingang des Koppelfeldes 10, wie der Eingang 1, führt auf einen Codierer 2, der aus jedem über den Eingang 1 zugeführte Datenwort ein Codewort erzeugt. Im vorliegenden Beispiel werde angenommen, daß jedes Datenwort acht Bit und jedes Codewort 16 Bit umfaßt. Die vom Codierer 2 erzeugten Codeworte werden in Teilcodeworte mit je vier Bit aufgeteilt, die über getrennte Verbindungen 3, 5, 7 und 9 auf je ein Teilkoppelfeld 12, 14, 16 und 18 führen. Jedes Teilkoppelfeld hat noch weitere Eingänge, die von entsprechenden Ausgängen der den weiteren, nicht dargestellten Eingängen des Koppelfeldes vorgeschalteten Codierern stammen.

Entsprechend führen die Ausgänge jedes Teilkoppelfeldes über die Verbindungen 13, 15, 17 und 19 auf eine Anzahl Eingänge eines Decoders für jeden Ausgang, wobei hier nur beispielsweise der Decoder 4 für den Ausgang 11 dargestellt ist. Dieser Decoder 4 empfängt somit an seinen Eingängen Codeworte entsprechend den vom Codierer 2 erzeugten Codeworten und gewinnt aus jedem Codewort das Datenwort, aus dem es im Codierer 2 oder einem anderen, nicht dargestellten Codierer gebildet wurde, zurück und gibt es am Ausgang 11 ab.

Auf diese Weise ist das Codierungsprinzip, wie es in der bereits angegebenen Druckschrift "Philips Technical Review", Vol. 41, 1983/84, Nr. 1, Seiten 1 bis 11 beschrieben ist, verwendet, jedoch hier zur Fehlersicherung der zu übertragenden Daten, wobei auch eine andersartige Struktur verwendet ist, denn es ist für ein zu übertragendes Datenwort jeweils nur ein Codierer, beispielsweise der Codierer 2, und nur ein Decoder, beispielsweise der Decoder 4, vorhanden, während dazwischen das Koppelfeld 10 angeordnet ist, das in vier Teilkoppelfelder aufgeteilt ist, die wiederum untereinander gleich aufgebaut sind. Dadurch ist es möglich, am Ausgang 11 die richtigen, d.h. fehlerfreien Datenwörter zu erzeugen, selbst wenn auf dem Datenweg durch eines der Teilkoppelfelder 12, 14, 16 oder 18 ein Fehler auftritt. Bei einem gleichzeitigen Fehler auf zwei solcher Datenwege kann dieser Fehler zumindest erkannt werden.

Das Koppelfeld 10 wird von einem Vermittlungsrechner 6 gesteuert, der über die Verbindung 20 in bekannter Weise die Steuerdaten für die einzelnen zu vermittelnden Kanäle erhält und daraus die Signale für die durchzuschaltenden Wege bestimmt. Dabei führt der Vermittlungsrechner 6 noch eine Vielzahl weiterer Aufgaben durch, die in diesem Zusammenhang jedoch nicht von Interesse sind. Der Vermittlungsrechner 6 kann insbesondere in einer Weise fehlergesichert sein, wie dies in der bereits genannten Druckschrift beschrieben ist.

Die vom Vermittlungsrechner 6 erzeugten Steuerdaten für die durchzuschaltenden Wege werden nicht direkt zum Einstellen der Teilkoppelfelder verwendet, sondern jedem Teilkoppelfeld 12, 14, 16 und 18 ist ein eigener Einstellprozessor 22, 24, 26 und 28 zugeordnet, die ihrerseits in der bekannten Weise fehlergesichert aufgebaut sein können und von denen jeder über getrennte Verbindungen 23, 25, 27 und 29 die gleichen Steuerdaten erhält und danach in untereinander gleicher Weise das zugehörige Teilkoppelfeld steuert, beispielsweise bei einem Raumkoppelfeld die einzelnen Koppelpunkte schaltet bzw. bei einem Zeitkoppelfeld die Speicheradressierung durchführt. Der spezielle Aufbau der Teilkoppelfelder, die auch aus mehreren Stufen bestehen können, ist hier nicht von Interesse. Die Einstellprozessoren 22, 24, 26 und 28 führen ferner Daten, die die durchgeschalteten Wege angeben, über eine gemeinsame Verbindung 21 einem Überwachungsrechner 8 zu. Dieser erhält ferner von dem Teil 4a des Decoders 4 Fehlersignale, wenn ein empfangenes Codewort fehlerhaft ist, wobei die vom Decoderteil 4a erzeugte Fehlerinformation außerdem angibt, in welchem Teilcodewort der Fehler vorhanden war, so daß die Verbindung zwischen Decoderteil 4a und Überwachungsrechner 8 allgemein aus mehreren Leitungen zur Übertragung mehrerer Bits besteht. Der Überwachungsrechner empfängt auch die ebenfalls jeweils mehrere Bits umfassenden Fehlersignale der anderen, nicht dargestellten Decoder. Außerdem erhält der Überwachungsrechner 8 über die Verbindung 21 von den Einstellprozessoren 22, 24, 26 und 28 Informationen über die durchgeschalteten Wege, so daß zusammen mit den Fehlersignalen genau ermittelt werden kann, welche durchgeschalteten Datenwege fehlerhaft sind.

Die Codierer entsprechend dem dargestellten Codierer 2 sowie die Decoder entsprechend dem dargestellten Decoder 4 mit dem Teil 4a zur Erzeugung des Fehlersignals können in herkömmlicher Weise aufgebaut sein, beispielsweise als Verknüpfungsnetzwerk oder als Tabelle in Form eines Festwertspeichers, der von den zugeführten Datenwörtern bzw. Codewörtern adressiert wird. In diesem Falle hat der Festwertspeicher für einen Codierer nur einen begrenzten Umfang, nämlich bei 8-Bit-Datenwörtern einen Umfang von 256 Adressen, von denen jede ein 16-Bit-Codewort speichert, das über den Ausgang des Festwertspeichers auf vier Verbindungen 3, 5, 7 und 9 mit je 4 Bit verteilt wird. Der Speicher im Decoder muß degegen sehr viel umfangreicher sein, da er auf den Verbindungen 13, 15, 17 und 19 von den Teilkoppelfeldern insgesamt jeweils ein 16-Bit-Codewort als Adresse erhält. Jede Adresse enthält dabei zwar nur ein 8-Bit-Datenwort bzw. ein Mehrbit-Fehlersignal, jedoch wirkt sich der Adressenumfang besonders stark auf den erforderlichen Aufwand aus.

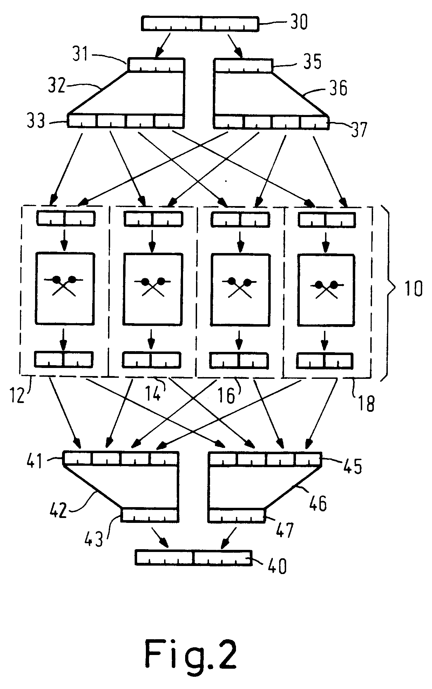

Um diesen Aufwand zu verringern, ist in Fig. 2 eine Anordnung mit zwei Teilcodierern 32 und 36 und zwei Teildecodern 42 und 46 dargestellt, wobei insbesondere die Teildecoder jeweils nur einen Adressenumfang von je 8 Bit haben. Dazu wird das symbolisch dargestellte Datenwort 30 mit 8 Bit in zwei Teile aufgeteilt, von denen jeder vier Bit umfaßt. Von diesen beiden 4-Bit-Teilen wird einer dem Eingang 31 des Teilcodierers 32 und der andere dem Eingang 35 des Teilcodierers 36 zugeführt. Jeder der Codierer 32 und 36 erzeugt an seinem Ausgang 33 bzw. 37 nur ein 8-bit-Untercodewort. Beide Codierer 32 und 36 sind dabei in gleicher Weise aufgebaut, d.h. beide erzeugen bei denselben Eingangsbitkombinationen dieselben Untercodewörter. Es ist klar, daß die beiden Codierer 32 und 36 auch in einem einzigen Codierer zusammengefaßt werden können, der einen entsprechend größeren Festwertspeicher umfaßt, oder sie können beide durch einen einzigen Festwertspeicher realisiert werden, der für beide Codierer im Zeitmultiplex verwendet wird.

Von den 8-Bit-Untercodewörtern an den Ausgängen 33 und 37 werden jeweils zwei Bit zu einem Teilcodewort zusammengefaßt, das jeweils einem Teilkoppelfelder 12, 14, 16 und 18 zugeführt wird, so daß jedes der beiden Untercodewörter auf alle vier Koppelfelder verteilt und dort übertragen wird.

Die an den Ausgängen der Teilkoppelfelder 12, 14, 16 und 18 auftretenden Teilcodewörter, die jeweils Teile beider Untercodewörter darstellen, werden jetzt wieder so, wie die Pfeile darstellen, auf die Eingänge 41 und 45 der beiden Decodierer 42 und 46 verteilt, so daß diese Eingänge jeweils ein vollständiges Untercodewort erhalten. Jedes Untercodewort wird in dem entsprechenden Teildecoder 42 bzw. 46 in eine 4-Bit-Kombination umgewandelt, die der entsprechenden Bit-Kombination an dem Eingang 31 bzw. 35 der Teilcodierer 32 bzw. 36 entspricht, aus der das Teilcodewort erzeugt worden ist. Die Codierung ist in der bereits erwähnten Weise so gewählt, daß bei einem Fehler bzw. einem Ausfall eines der Teilkoppelfelder jeder Decodierer 42 bzw. 46 aus den drei richtig empfangenen 2-Bit-Codewortteilen jeweils die richtige Bitkombination am Ausgang 43 bzw. 47 erzeugen kann, wobei beide Bitkombinationen das ursprüngliche 8-Bit-Datenwort ergeben, das symbolisch mit 40 bezeichnet ist. Zwar ist die Möglichkeit der Fehlerkorrektur und Fehlererkennung durch die Aufteilung in zwei Teildecoder 42 und 46 verringert, jedoch in einem praktisch nur wenig wirksamen Ausmaß. Dafür ist der Aufwand für den Decoder sehr stark verringert worden, da jeder Teildecoder nur einen Festwertspeicher mit einer Adressenbreite von 8 Bit, d.h. jeder nur 256 Adressen enthalten muß. Die Erzeugung der Fehlersignale der beiden Teildecoder 42 und 46 ist nicht gesondert dargestellt, versteht sich jedoch von selbst.

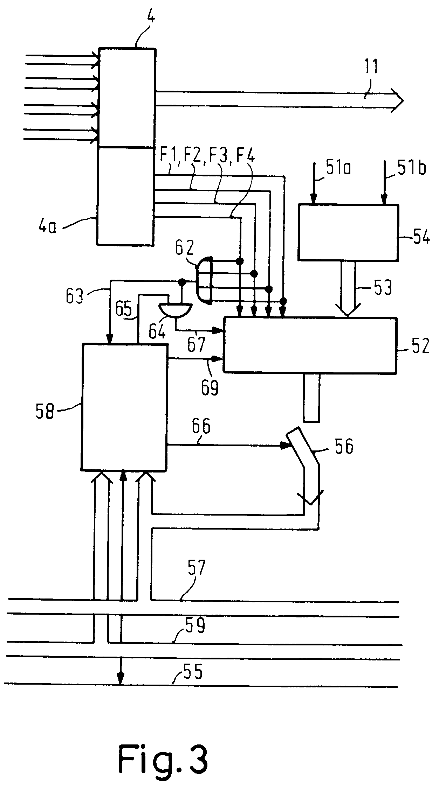

Die Behandlung dieser Fehlersignale, d.h. deren Übertragung zum Überwachungsrechner, ist in Fig. 3 für einen Decoder dargestellt, der wie in Fig. 2 aus zwei Teildecodierern aufgebaut sein kann, jedoch auch in anderer Weise. Der Decoder 4 erzeugt aus den zugeführten Teilcodewörtern das Datenwort auf der Verbindung 11 sowie im Teil 4a, der bei Realisierung als Festwertspeicher nur durch weitere Ausgänge des Festwertspeichers gebildet wird, die Fehlersignale, die auf Leitungen F1 bis F4 abgegeben werden. Die Fehlersignale auf diesen Leitungen F1 bis F4 sind gemäß nachstehender Tabelle aufgebaut.

## TABELLE

| Störung in Teil-koppelfeld Nr. | Ausgangssignal am Fehlerdecoder | | | |
|---|---|---|---|---|
| | F1 | F2 | F3 | F4 |
| ohne Fehler | O | O | O | O |
| 1 | 1 | O | O | O |
| 2 | O | 1 | O | O |
| 3 | O | O | 1 | O |
| 4 | O | O | O | 1 |

Die Tabelle bezieht sich nur auf die Fälle, in denen entweder kein Fehler vorliegt oder nur ein Teilkoppelfeld gestört ist. Wenn beispielsweise zwei Teilkoppelfelder gleichzeitig gestört sind, kann dies vom Decoder 4 festgestellt werden, wobei dann allerdings kein Datenwort mehr auf der Verbindung 11 abgegeben wird, sondern es führen zwei der Leitungen F1 bis F4 gleichzeitig ein entsprechendes Signal.

Die Leitungen F1 bis F4 führen auf die Eingänge eines Zwischenspeichers 52 sowie auf die Eingänge eines ODER-Glieds 62, das beim Vorliegen eines Fehlersignals auf einem der Ausgänge ein entsprechendes Signal auf der Leitung 63 einer Steuerlogik 58 zuführt. Diese erzeugt ein entsprechendes Signal auf dem Steuerbus 55, der mit dem Überwachungsrechner verbunden ist und diesem anzeigt, daß in einem Decoder, d.h. in einem Übertragungsweg ein Fehler aufgetreten ist.

Dem Zwischenspeicher 52 werden über eine Verbindung 53 ferner Signale zugeführt, die die Nummer des momentan in der Vermittlungsanlage vermittelten Kanals angeben. In diesem Beispiel ist ein Kanalzähler 54 vorgesehen, der bei jedem Rahmenanfang in der Vermittlungsanlage ein Rückstellsignal auf der Leitung 51a und mit jedem neuen Kanal ein Zähltaktsignal auf der Leitung 51b erhält.

Das Signal auf der Leitung 63 von dem ODER-Glied 62, das beim Melden eines Fehlers auftritt, wird auch einem UND-Glied 64 zugeführt, das von einem aus der Steuerlogik 58 über die Leitung 65 kommendes Signal zunächst freigegeben ist. Dadurch wird bei einer Fehlermeldung ein Signal auf der Ausgangsleitung 67 des UND-Glieds 64 erzeugt und damit die an den Eingängen des Zwischenspeichers 52 anliegenden Signale darin eingeschrieben. Sobald der Zwischenspeicher 52 gefüllt ist, wird das UND-Glied 64 über die Leitung 65 gesperrt, so daß bei weiteren Fehlersignalen keine Information eingeschrieben wird, d.h. diese weiteren Fehlersignale werden ignoriert. Wenn der Zwischenspeicher 52 nur ein einfaches Register ist, kann nur ein Fehlersignal mit zugehöriger Kanalnummer eingeschrieben werden. Bei Ausbildung des Zwischenspeichers 52 mit mehreren Speicherplätzen, beispielsweise in Form eines FIFO, werden in der Steuerlogik 58 die Anzahl der gespeicherten Fehlersignale über die Leitung 63 gezählt und, sobald dann der Speicher 52 gefüllt ist, das UND-Glied 64 über die Leitung 65 gesperrt.

Wenn der in Fig. 3 nicht dargestellte Überwachungsrechner die gespeicherten Fehlermeldungen, über die er durch die Signale auf dem Steuerbus 55 informiert worden ist, abfragen will, übersendet er über einen Adressenbus 59 eine Adresse, die zusammen mit Steuersignalen vom Steuerbus 55 die Steuerlogik 58 ansteuert, so daß sie den Schalter 56 am Ausgang des Zwischenspeichers 52 schließt und die darin gespeicherte Fehlermeldung über den Datenbus 57 zum Überwachungsrechner überträgt. Wenn der Zwischenspeicher 52 mehrere Speicherplätze für mehrere Fehlermeldungen enthält, können auch mehrere dieser Fehlermeldungen oder alle unmittelbar nacheinander übertragen werden. Über die Leitung 69 löscht die Steuerlogik 58 die ausgelesenen Speicherplätze im Zwischenspeicher 52. Gegebenenfalls wird dann das UND-Glied 64 wieder freigegeben, so daß danach neue Fehlermeldungen gespeichert werden können. Anhand der abgerufenen Fehlermeldungen und der Kanalnummern kann der Überwachungsrechner zusammen mit den von den Einstellrechnern der einzelnen Teilkoppelfelder übermittelten Vermittlungswegeinfor-

EP 0 219 917 B1

mation genau bestimmen, an welcher Stelle gegebenenfalls ein Defekt in der Anlage vorliegt.

Auf diese Weise ist es nicht nur möglich, trotz eines Fehlers in der Vermittlungsanlage, beispielsweise im Koppelfeld, die zugeführten Datenwörter am Ausgang richtig anzugeben, sondern außerdem die Fehlerstelle genau zu ermitteln, wobei eine Reparatur durch Ersetzen einer Baugruppe, insbesondere wenn diese ein Teilkoppelfeld und gegebenenfalls den zugehörigen Einstellprozessor umfaßt, ohne Abschalten der Anlage durchzuführen ist.

**Patentansprüche**

1.  Vermittlungsanlage zur rechnergesteuerten Vermittlung einer Vielzahl von Leitungen, von denen jede digitale zeitverschachtelte Daten führt, über ein Koppelfeld, das die Daten in Form von mehrere Datenbits umfassenden Datenwörtern parallel überträgt,
    dadurch gekennzeichnet, daß dem Koppelfeld (10) ein Codierer (2) vorgeschaltet ist, der aus jedem Datenwort ein Codewort mit einer Anzahl Codebits, die größer als die Anzahl Datenbits je Datenwort ist, erzeugt und dem Koppelfeld (10) zuführt, das in eine Anzahl paralleler Teilkoppelfelder (12, 14, 16, 18) zur Übertragung jeweils eines Teilcodewortes, bestehend aus einem Teil der Codebits, aufgeteilt ist, und daß dem Koppelfeld (10) ein Decoder (4, 4a) nachgeschaltet ist, der aus allen Teilcodewörtern die ursprünglichen Datenwörter erzeugt, wobei die Codewörter und die Teilcodewörter in an sich bekannter Weise derart aufgebaut sind, daß bei mindestens einem verfälschten Teilcodewort der Decoder (4, 4a) die richtigen Datenwörter und ein das verfälschte Teilcodewort anzeigendes Fehlersignal erzeugt.

2.  Vermittlungsanlage nach Anspruch 1,
    dadurch gekennzeichnet, daß die Anzahl der Codebits je Codewort doppelt so groß ist wie die Anzahl der Datenbits je Datenwort.

3.  Vermittlungsanlage nach Anspruch 1 oder 2,
    dadurch gekennzeichnet, daß jedem Teilkoppelfeld (12, 14, 16, 18) ein eigener, vorzugsweise fehlergesicherter Einstellrechner (22, 24, 26, 28) zugeordnet ist und alle Einstellrechner parallel von einem vorzugsweise fehlergesicherter zentralen Vermittlungsrechner (6) gesteuert sind.

4.  Vermittlungsanlage nach Anspruch 1 oder einem der folgenden,
    dadurch gekennzeichnet, daß der dem Koppelfeld (10) vorgeschaltete Coder (2) aus mindestens zwei Teilcodierern (32, 36) besteht, von denen jeder einen anderen Teil des Datenwortes empfängt und ein Untercodewort erzeugt, daß jedes Teilkoppelfeld (12, 14, 16, 18) ein Teilcodewort aus jeweils einem anderen Teil der Codebits mindestens einiger Untercodewörter überträgt, so daß alle Teilkoppelfelder alle Untercodewörter übertragen, und daß der dem Koppelfeld (10) nachgeschaltete Decoder aus einer der Anzahl Teilcodierer (32, 36) gleichen Anzahl Teildecodern (42, 46) besteht, die derart mit den Ausgängen des Koppelfeldes (10) verbunden sind, daß jeder Teildecoder (42, 46) jeweils alle Codebits eines Untercodewortes erhält und den entsprechenden Teil des Datenwortes erzeugt.

5.  Vermittlungsanlage nach Anspruch 1 oder einem der folgenden,
    dadurch gekennzeichnet, daß die Teilcodierer (32, 36) und die Teildecoder (42, 46) je untereinander gleich aufgebaut sind.

6.  Vermittlungsanlage nach Anspruch 1 oder einem der folgenden, wobei des Fehlersignal des Decoders von einem Rechner ausgewertet wird,
    dadurch gekennzeichnet, daß ein dem Decoder (4, 4a) zugeordneter Fehlerspeicher (52) mit den Fehlersignalausgängen (F1 bis F4) des Decoders (4, 4a) und mit einer den Vermittlungsweg durch das Koppelfeld (10) anzeigenden Einrichtung (52), insbesondere einem die Datenwörter innerhalb eines Rahmens zählenden Zählers, verbunden ist, daß beim Auftreten eines Fehlersignals dieses und die Anzeige des Vermittlungsweges im Fehlerspeicher (52) gespeichert und ein entsprechendes Signal an einen Überwachungsrechner (8) übersandt wird, und daß der Überwachungsrechner (8) über einen Datenbus (57) den Inhalt des Fehlerspeichers (52) abruft und diesen löscht.

7.  Vermittlungsanlage nach Anspruch 6,
    dadurch gekennzeichnet, daß der Fehlerspeicher (52) die Signale mehrerer nacheinander auftretender Codewortfehler speichert und der Überwachungsrechner (8) nur die jeweils abgerufenen Signale der gespeicherten Fehler löscht.

8

## Claims

1. Exchange for computer-controlled switching of a plurality of lines each of which carrying digital time-interleaved data, *via* a switching matrix which transmits the data in parallel in the form of data words comprising a plurality of data bits, characterized in that the switching matrix (10) is preceded by an encoder (2) which produces from each data word a codeword having a number of code bits exceeding the number of data bits of each data word and applies it to the switching matrix (10), which switching matrix is divided into a number of parallel sub-switching matrices (12, 14, 16, 18) for transmitting each sub-codewords consisting of a portion of the code bits, and in that the switching matrix (10) is followed by a decoder (4, 4a) which produces the original data words from all the sub-codewords, the codewords and the sub-codewords being structured in a manner known per se, so that, when there is at least one mutilated sub-codeword, the decoder (4, 4a) produces the correct data words and an error signal which indicates the mutilated sub-codeword.

2. Switching exchange as claimed in Claim 1, characterized in that the number of code bits of each codeword is twice as large as the number of data bits of each data word.

3. Switching exchange as claimed in Claim 1 or 2, characterized in that each sub-switching matrix (12, 14, 16, 18) has its own assigned, preferably error-protected setting computer (22, 24, 26, 28) and all the setting computers are controlled in parallel by a preferably error-protected central switching computer (6).

4. Switching exchange as claimed in Claim 1 or one of the Claims subsequent thereto, characterized in that the encoder (2) preceding the switching matrix (10) consists of at least two sub-encoders (32, 36) each of which receives a different portion of the data word and produces a sub-codeword, in that each sub-switching matrix (12, 14, 16, 18) transmits a sub-codeword from always a different portion of the code bits of at least some sub-codewords, so that all the sub-switching matrices transmit all the sub-codewords, and in that the decoder subsequent to the switching matrix (10) consists of a number of sub-decoders (42, 46) equal to the number of sub-encoders (32, 36), and are connected to the outputs of the switching matrix (10) so that each sub-decoder (42, 46) always receives all the code bits of a sub-codeword and produces the corresponding portion of the data word.

5. Switching exchange as claimed in Claim 1 or one of the Claims subsequent thereto, characterized in that the sub-encoders (32, 36) and the sub-decoders (42, 46) are of identical structure.

6. Switching exchange as claimed in Claim 1 or any one of the Claims subsequent thereto, the error signal of the decoder being evaluated by a computer, characterized in that an error store (52) assigned to a decoder (4, 4a) is connected to the error signal outputs (F1 to F4) of the decoder (4, 4a) and to an arrangement (52) which indicates the transmission path through the switching matrix (10), more specifically, a counter counting the data words in a frame, in that if there is an error signal, this signal as well as the indication of the transmission path is stored in the error store (52) and an appropriate signal is sent to a supervisory computer (8), and in that the supervisory computer (8) retrieves the contents of the error store (52) *via* a data bus (57) and erases the error store.

7. Switching exchange as claimed in Claim 6, characterized in that the error store (52) stores the signals of several consecutively occurring codeword errors and the supervisory computer (8) only erases the retrieved signals of the stored errors.

## Revendications

1. Dispositif de commutation pour la commutation commandée par ordinateur d'une pluralité de lignes qui acheminent chacune des données numériques imbriquées dans le temps via une matrice de commutation qui transfère les données en parallèle sous la forme de mots de données comprenant plusieurs bits, caractérisé en ce qu'en amont de la matrice de commutation (10) est connecté un codeur (2) qui produit à partir de chaque de données, un mot de code comportant un nombre de bits de codage qui est plus important que le nombre de bits de données de chaque mot de données et l'achemine à la matrice de commutation (10) qui est divisée en un certain nombre de matrices de commution partielles parallèles (12, 14, 16, 18) destinées à transmettre chacune un mot de code partiel constitué d'une partie des bits de codage, et en aval de la matrice de commutation (10) est connecté un décodeur (4, 4a) qui produit à partir de tous les mots de code partiels les mots de données originaux, les mots de code et les mots de code partiels étant structurés de manière connue en soi pour qu'au moins dans le cas d'un mot de code partiel altéré, le décodeur (4, 4a) produise les mots de données corrects et un signal d'erreur indiquant le mot de code partiel altéré.

2. Dispositif de commutation selon la revendication 1, caractérisé en ce que le nombre de bits de codage par mot de code vaut le double du nombre des bits d'information par mot de données.

3. Dispositif de commutation selon la revendication 1 ou 2, caractérisé en ce que, à chaque matrice de commutation partielle (12, 14, 16, 18) est affecté un ordinateur de réglage (22, 24, 26, 28) propre, de préférence protégé contre les défaillances et tous les ordinateurs de réglage sont commandés en parallèle par un ordinateur de commutation central (6), de préférence protégé contre les défaillances.

4. Dispositif de commutation selon la revendication 1 ou l'une des revendications suivantes, caractérisé en ce que le codeur (2) installé en amont de la matrice de commutation (10) est constitué au moins de deux codeurs partiels (32, 36), qui reçoivent chacun une autre partie du mot de données et produisent un mot de sous-code, que chaque matrice de commutation partielle (12, 14, 16, 18) transmet un mot de code partiel constitué respectivement d'une autre partie des bits de codage d'au moins certains mots de sous-code, de telle sorte que toutes les matrices de commutation partielles transmettent tous les mots de sous-code, et que le décodeur connecté en aval de la matrice de commutation (10) est constitué d'un nombre de décodeurs partiels (42, 46) égal au nombre de codeurs partiels (32, 36), ces décodeurs étant connectés aux sorties de la matrice de commutation (10), de telle sorte que chaque décodeur partiel (42, 46) reçoive respectivement tous les bits de codage d'un mot de sous-code et produise la partie correspondante du mot de données.

5. Dispositif de commutation selon la revendication 1 ou l'une quelconque des revendications suivantes, caractérisé en ce que les codeurs partiels (32, 36) et les décodeurs partiels (42, 46) peuvent être structurés mutuellement de la même manière.

6. Dispositif de commutation selon la revendication 1 ou selon l'une quelconque des revendications suivantes, dans lequel le signal d'erreur du décodeur est évalué par un ordinateur, caractérisé en ce qu'une mémoire d'erreurs (52) affectée au décodeur (4, 4a) est connectée aux sorties de signaux d'erreurs (F1 à F4) du décodeur (4, 4a) et à un dispositif (52) affichant la voie de commutation à travers la matrice de commutation (10), en particulier un compteur comptant les mots de données à l'intérieur d'une trame qu'à l'apparition d'un signal d'erreur, celui-ci et l'affichage de la voie de commutation sont stockés dans la mémoire d'erreurs (52) et un signal correspondant est transmis à un ordinateur de surveillance (8), et l'ordinateur de surveillance (8) appelle le contenu de la mémoire d'erreurs (52) via un bus de données (57) et l'efface.

7. Dispositif de commutation selon la revendication 6, caractérisé en ce que la mémoire d'erreurs (52) stocke les signaux de plusieurs erreurs de mots de code apparaissant successivement et l'ordinateur de surveillance (8) n'efface que les signaux respectivement appelés des erreurs stockées.

Fig.1

Fig.2

Fig.3